# FASCICULE DE BREVET EUROPEEN

(11) **EP 2 192 704 B1**
(45) Date de publication et mention de la délivrance du brevet: **27.02.2013**
(21) Numéro de dépôt: 09176552.9
(22) Date de dépôt: 19.11.2009
(51) Int. Cl.: H04B 10/077

(54) **Mesure du retard de groupe différentiel d'une liaison par fibre optique**
Messung der Verzögerung der Differentialgruppe einer Lichtleitfaserverbindung
Measurement of the delay of a differential unit of a fibre optics link

(30) Priorité: 27.11.2008 FR 0858068
(43) Date de publication de la demande: 02.06.2010
(73) Titulaire: France Télécom, 75015 Paris (FR)
(72) Inventeur: Pincemin, Erwan, 22290, Gommenec'h (FR); Hui Bon Hoa, Daniel, 22300, Lannion (FR); Gavignet, Paulette, 22730, Tregastel (FR); Dourthe, Christian, 22300, Lannion (FR)
(74) Mandataire: Regimbeau

(56) Documents cités:
- WO-A-2007/074277
- JP-A- 2008 224 231
- WANG JIAN ET AL: "Experiments of PMD compensation using electrical feedback signals for a 10 Gbit/s system" PROCEEDINGS OF THE SPIE - THE INTERNATIONAL SOCIETY FOR OPTICAL ENGINEERING, SPIE, PO BOX 10 BELLINGHAM WA 98227-0010 USA, vol. 5281, 1 mai 2005 (2005-05-01), pages 309-313, XP002405988 ISSN: 0277-786X

## Description

La présente invention concerne une mesure de retard de groupe différentiel d'une liaison par fibre optique.

L'invention trouve des applications notamment dans les domaines des télécommunications et de la métrologie de fibre optique. En particulier, elle sert à la qualification d'une liaison par fibre optique pour la recette de systèmes de transmission optique à multiplexage en longueur d'onde WDM ("Wavelength Division Multiplexing" en anglais) à haut débit et longue distance avec une modulation à saut de phase BPSK ("Binary Phase Shift Keying" en anglais) ou à saut de phase différentiel DPSK ("Differential Phase Shift Keying" en anglais).

Dans un système de transmission par fibre optique, l'ensemble de la liaison, incluant les sections de fibre de ligne et de fibre de compensation de dispersion chromatique ainsi que divers éléments du système tels que des multiplexeurs, des démultiplexeurs, des amplificateurs et des composants d'insertion et d'extraction de canaux OADM ("Optical Add Drop Multiplexer" en anglais) se comporte comme un milieu biréfringent qui induit des effets néfastes pour la propagation d'un signal optique polarisé modulé par un signal numérique et injecté dans la liaison.

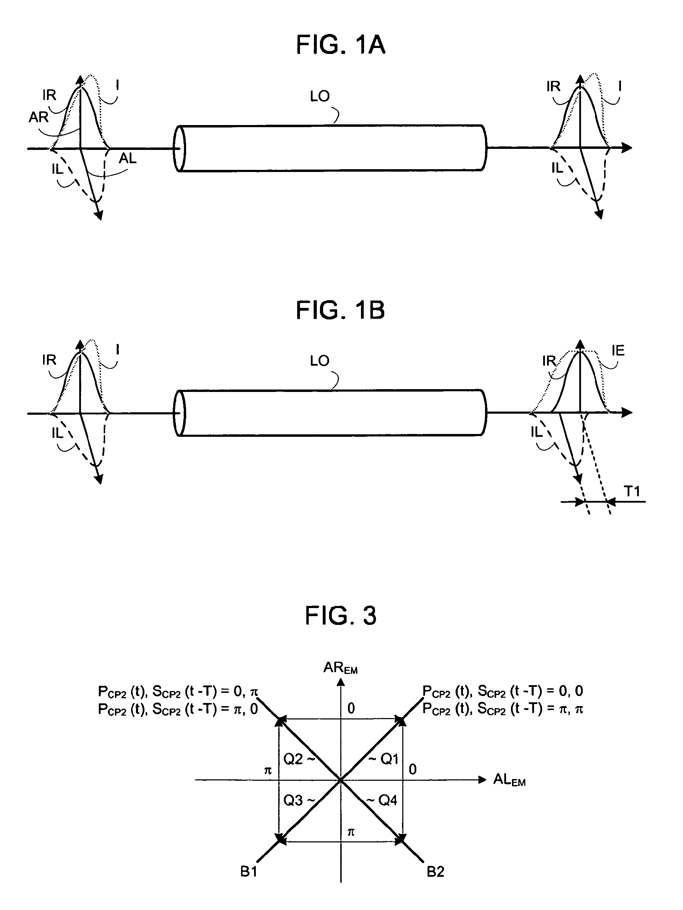

Selon un modèle simple de propagation d'une impulsion I du champ électrique d'un signal optique polarisé linéairement dans une liaison optique LO, illustrée aux figures 1A et 1B, l'impulsion I se décompose en une impulsion rapide IR et une impulsion lente IL selon des axes de polarisation orthogonaux rapide AR et lent AL du milieu biréfringent. L'état de polarisation de l'impulsion I est associé au degré d'inclinaison de l'impulsion par rapport à l'un des axes de polarisation, plus particulièrement l'axe rapide AR. Par exemple, pour une inclinaison de 45°, la puissance de l'impulsion I est équirépartie sur les deux axes.

Pour une propagation idéalement sans défaut montrée à la figure 1A, des impulsions IR et IL selon les axes AR et AL en sortie de la liaison optique LO sont synchrones. Cependant comme montré à la figure 1B, la liaison optique n'étant pas parfaite, le phénomène de biréfringence se traduit par une impulsion élargie IE reçue en sortie de la liaison qui résulte de la somme des impulsions IR et IL respectivement transmises suivant les axes AR et AL. D'une part, l'impulsion élargie IE dépend d'une variation des temps de propagation différents des impulsions IR et IL qui est due à des variations de biréfringence accumulées le long de la liaison LO qui induit un retard T1 de la propagation de l'impulsion lente IL par rapport à l'impulsion rapide IR à la sortie de la liaison LO. D'autre part, l'impulsion élargie IE dépend de la répartition de la puissance de l'impulsion I entre les axes de polarisation AR et AL, de la variation de la position des axes de polarisation le long de la liaison, de la longueur d'onde du signal optique de l'impulsion I et des conditions d'environnement de la liaison LO. Le retard T1, appelé retard de groupe différentiel DGD ("Differential Group Delay" en anglais), doit être maintenu dans une plage de tolérance spécifiée par un retard maximal DGDmax déterminé en fonction du débit, du codage et du format de modulation du signal injecté dans la liaison. Ce retard maximal doit être inférieur à la période du bit 1/D inversement proportionnelle au débit D en bit/s du signal numérique modulant le signal optique transmise à travers la liaison.

Le retard de groupe différentiel DGD est à la fois variable dans le temps et fonction de la longueur d'onde du signal optique. Le retard de groupe différentiel est une grandeur instantanée qui dépend de nombreux facteurs physiques susceptibles de varier avec le temps, tels que la température, des contraintes appliquées localement sur une fibre optique, etc. La connaissance de la valeur instantanée du retard de groupe différentiel T1 d'une liaison est essentielle pour effectuer la recette de systèmes WDM ou améliorer la qualité de la transmission.

La dispersion totale du signal optique modulé sortant du système de transmission par fibre optique due à la polarisation du signal injecté et à la biréfringence du milieu optique du système est caractérisée par une grandeur appelée dispersion modale de polarisation PMD ("Polarisation Mode Dispersion" en anglais). Cette grandeur correspond à la moyenne des retards de groupe différentiels DGD pour tous les états de polarisation et toutes les longueurs d'onde des signaux transmis par la liaison pendant la durée de la mesure de dispersion modale de polarisation.

La demande de brevet WO 2007/074277 au nom du déposant divulgue une mesure instantanée du retard de groupe différentiel T1 dans une liaison par fibre optique avec une modulation directe par impulsions NRZ-OOK ("Non-Return to Zero/On-Off Keying" en anglais). Le retard de groupe différentiel est mesuré dans un canal de test de la liaison correspondant à une longueur d'onde spécifique du signal optique sans provoquer de rupture de trafic des signaux optiques multiplexés aux autres longueurs d'onde dans les canaux de la liaison.

Un système de mesure pour mesurer le retard de groupe différentiel selon la demande de brevet précitée comprend, à l'entrée de la liaison, un transmetteur pour moduler un signal optique par les impulsions d'une séquence de test binaire ayant un débit donné D dans un canal de test et un premier contrôleur de polarisation apte à balayer des états de polarisation appliqués au signal modulé. En sortie de la liaison, le système de mesure comprend un deuxième contrôleur de polarisation indépendant du premier contrôleur apte à balayer des états de polarisation appliquée au signal modulé sortant de la liaison, un émulateur de retard de groupe différentiel apte à faire varier un retard de groupe différentiel additionnel variable T2 et un oscilloscope numérique apte à déterminer l'égalité T1 + T2 = 1/D sur le signal modulé résultant transmis par l'émulateur. Dans l'émulateur, le signal optique polarisé sortant du deuxième contrôleur de polarisation est séparé par biréfringence en un signal optique modulé retardé de T2 suivant l'axe lent et un signal optique modulé non retardé suivant l'axe rapide. A la sortie de l'émulateur, le signal optique modulé retardé et le signal optique modulé non retardé sont combinés en un signal modulé résultant appliqué à l'oscilloscope numérique. Comme le signal optique du canal de test subit directement une modulation par les impulsions de la séquence de test, le signal résultant sortant de l'émulateur présente trois niveaux. Le niveau maximum dans le signal résultant correspond à l'addition de deux impulsions synchrones du signal retardé de T2 et du signal non retardé. Le niveau intermédiaire dans le signal résultant correspond à une impulsion soit dans le signal retardé, soit dans le signal non retardé. En réglant convenablement les états de polarisation des contrôleurs et en ajustant le retard dans l'émulateur, le retard T2 peut être déduit lorsque l'ouverture du diagramme de l'oeil du signal résultant est maximum dans l'oscilloscope numérique.

Lorsque la liaison par fibre optique est soumise à une modulation de phase BPSK ou DPSK, le signal optique modulé propagé le long de la liaison présente une amplitude constante. Entre deux périodes binaires consécutives du signal, le saut de phase du signal optique est de 0 ou π suivant l'état du bit d'information à transmettre. A cause de la dispersion modale de polarisation dans la liaison, les composantes lente et rapide du signal résultant modulé en phase sortant de l'émulateur présentent à tout instant t soit la même phase 0 ou π, soit deux phases opposées 0 et π. Comme ces composantes lente et rapide sont orthogonales, la puissance totale du signal résultant observée sur l'oscilloscope est alors constante. En l'absence de modulation d'amplitude, notamment par impulsions, de l'intensité du signal, un diagramme de l'oeil du signal résultant à plusieurs niveaux d'amplitude ne peut être produit directement en sortie de l'émulateur par l'oscilloscope numérique.

La présente invention remédie aux inconvénients évoqués ci-dessus par un procédé de mesure du retard de groupe différentiel d'une liaison par fibre optique transportant un signal optique modulé par un signal numérique à un débit donné, comprenant une rotation de l'état de polarisation du signal optique modulé sortant de la liaison, une introduction d'un retard additionnel dans le signal optique modulé, une combinaison du signal optique modulé retardé et du signal optique modulé non retardé polarisés suivant deux composantes orthogonales en un signal résultant optique, et une détermination du retard de groupe différentiel de la liaison optique égal à la différence entre l'inverse du débit donné et le retard additionnel, le procédé comprenant aussi les étapes suivantes :
une modulation de phase du signal optique par le signal numérique en entrée de la liaison, et
une sélection de l'état de polarisation du signal résultant sensiblement suivant l'une des bissectrices des axes orthogonaux en un signal polarisé linéairement,
la détermination du retard de groupe différentiel dépendant de caractéristique du signal polarisé.

Grâce à la sélection de l'état de polarisation du signal résultant sensiblement suivant l'une des bissectrices des axes orthogonaux, le signal optique modulé retardé et le signal optique modulé non retardé interfèrent à la sortie du polariseur et donnent naissance à un signal optique modulé en intensité à deux niveaux reconnaissable par un oscilloscope lorsque l'égalité T1 + T2 = 1/D est satisfaite.

La sélection d'état de polarisation peut être réalisée, soit par une rotation d'un polariseur orientable pour aligner l'axe de polarisation du polariseur orientable sensiblement avec l'une des bissectrices de l'angle formé par les deux axes orthogonaux propres à un émulateur de retard de groupe différentiel, soit par une rotation de l'état de polarisation du signal résultant pour amener la moitié de l'énergie du signal optique modulé retardé correspondant à une composante lente et du signal optique modulé non retardé correspondant à une composante rapide à passer dans un polariseur optique fixe.

Le procédé de mesure du retard de groupe différentiel selon l'invention fournit avantageusement la valeur instantanée du retard de groupe différentiel DGD total de la liaison par fibre optique à une longueur d'onde donnée. L'automatisation de la mesure de retard de groupe différentiel selon l'invention rend plus précise la mesure du retard DGD tout en assurant une rapidité de la mesure compatible avec la variation du retard DGD dépendant notamment des variations de température et des contraintes appliquées sur la liaison.

Le retard de groupe différentiel peut être mesuré automatiquement selon deux réalisations qui peuvent être combinées.

Lorsque la caractéristique du signal optique polarisé émergeant du polariseur optique orientable ou du polariseur fixe susmentionné est un diagramme de l'oeil, la détermination du retard de groupe différentiel peut comprendre
une acquisition d'un diagramme de l'oeil à deux niveaux du signal polarisé correspondant aux états de polarisation et au retard additionnel introduit dans le signal optique modulé,
une maximisation d'un nombre de points présents dans une zone de collecte du diagramme de l'oeil par rotation au moins de l'état de polarisation du signal optique modulé sortant de la liaison,
une association du retard additionnel au nombre de points maximisé,
une incrémentation du retard additionnel et une itération des étapes précédentes tant que le nombre de points n'a pas atteint au moins un nombre maximum, et
si le nombre maximum est atteint, une détermination du retard de groupe différentiel de la liaison optique égal à la différence entre l'inverse du débit donné et le retard additionnel associé au nombre maximum.

Lorsque la caractéristique du signal optique polarisé émergeant du polariseur optique orientable ou du polariseur fixe susmentionné est un spectre fréquentiel, la détermination du retard de groupe différentiel peut comprendre
une acquisition de spectre du signal polarisé correspondant aux états de polarisation et au retard additionnel introduit dans le signal optique modulé,
une maximisation de l'amplitude de raies d'absorption localisées à la somme et à la différence entre la fréquence du signal optique et un multiple entier du demi-débit donné par rotation au moins de l'état de polarisation du signal optique modulé sortant de la liaison, lesdites somme et différence pouvant être des fréquences délimitant un lobe central de largeur spectrale D si le multiple entier est égal à 1, ou deux lobes secondaires si le multiple entier est différent de 1, du spectre du signal polarisé émergeant du polariseur de type signal duo-binaire obtenu par sommation du signal optique modulé non-retardé et du signal optique modulé retardé d'un temps bit 1/D égal à la somme du retard de groupe différentiel de la liaison et du retard additionnel généré par l'émulateur,
une association du retard additionnel aux raies d'absorption spectrales maximisées et donc au spectre caractéristique du signal duo-binaire,
une incrémentation du retard additionnel et une itération des étapes précédentes tant que les raies d'absorption spectrales n'ont pas atteintes des amplitudes maximales et donc tant que le spectre n'est pas celui du signal duo-binaire, et
si les amplitudes maximales sont atteintes et donc si le spectre acquis est celui du signal duo-binaire, une détermination du retard de groupe différentiel de la liaison optique égal à la différence entre l'inverse du débit donné 1/D et le retard additionnel associé aux amplitudes maximales.

La liaison peut être une portion d'une liaison par fibre optique par exemple entre une entrée et un élément de la liaison tels qu'un multiplexeur, un démultiplexeur, un amplificateur et un composant d'insertion et d'extraction de canaux.

Selon une caractéristique de l'invention, le retard de groupe différentiel est mesuré avec plus de précision pour toute la liaison par fibre optique si une rotation de l'état de polarisation du signal optique modulé est prévue en entrée de la liaison optique. Cette caractéristique permet d'injecter un maximum de puissance à l'entrée de la liaison en fonction de l'orientation des axes de biréfringence de celle-ci.

Le procédé selon l'invention sert en outre à estimer une dispersion modale de polarisation en moyennant plusieurs retards de groupe différentiels déterminés pendant une période prédéfinie à différentes longueurs d'onde.

L'invention a aussi pour objet un système de mesure de retard de groupe différentiel d'une liaison par fibre optique transportant un signal optique modulé de type BPSK ou DPSK à un débit donné, comprenant un moyen pour tourner l'état de polarisation du signal optique modulé sortant de la liaison, un moyen pour introduire un retard additionnel dans le signal optique modulé, un moyen pour combiner le signal optique modulé retardé et le signal optique modulé non retardé polarisés suivant deux composantes orthogonales en un signal résultant optique, et un moyen pour déterminer le retard de groupe différentiel de la liaison optique égal à la différence entre l'inverse du débit donné et le retard additionnel. Le moyen pour combiner peut être un émulateur de retard de groupe différentiel ayant des axes orthogonaux propres lent et rapide suivant lesquels le signal optique modulé sortant de la liaison est décomposé en deux composantes dont l'une subit le retard additionnel. Le moyen pour tourner sert à orienter l'état de polarisation du signal optique modulé sortant de la liaison et ayant subi un retard différentiel de groupe dans la liaison afin de l'aligner sensiblement à 45° des axes orthogonaux propres à l'émulateur.

Le système de mesure est caractérisé en ce qu'il comprend :
un moyen en entrée de la liaison pour moduler en phase le signal optique par le signal numérique, et
un moyen pour sélectionner l'état de polarisation du signal résultant sensiblement suivant l'une des bissectrices des axes orthogonaux en un signal polarisé linéairement,
le moyen pour déterminer étant apte à déterminer le retard de groupe différentiel en dépendance de caractéristique du signal polarisé.

Le système de mesure selon l'invention est avantageusement non intrusif et ne provoque pas de rupture du trafic sur tous les canaux optiques de la liaison.

Le moyen pour sélectionner peut comprendre
un polariseur fixe et un moyen pour tourner l'état de polarisation du signal retardé sortant du moyen pour introduire un retard additionnel et du signal non-retardé de manière à ne laisser passer que sensiblement la moitié de l'énergie de chacun des états de polarisation orthogonaux du signal résultant, c'est-à-dire la moitié de l'énergie du signal optique modulé retardé, qui correspond à une composante lente du signal résultant, et du signal optique modulé non retardé, qui correspond à une composante rapide du signal résultant, au travers du polariseur fixe,
ou bien un polariseur orientable apte être tourné pour aligner son axe de polarisation avec l'une des bissectrices de l'angle formé par les deux axes propres orthogonaux du moyen pour combiner le signal optique modulé retardé et le signal optique modulé non retardé.

En accord avec la caractéristique du signal polarisé, le moyen pour déterminer peut comprendre un oscilloscope numérique pour acquérir un diagramme de l'oeil du signal polarisé, ou bien un analyseur de spectre optique pour acquérir un spectre optique du signal polarisé.

Lorsque la liaison par fibre optique est à multiplexage en longueur d'onde WDM, le système de mesure peut comprendre un filtre accordable pour sélectionner une longueur d'onde dans la liaison. Le filtre accordable peut être connecté à travers l'amplificateur optique à un port de surveillance d'un élément quelconque de la liaison optique. Cet élément est par exemple un amplificateur optique, un démultiplexeur ou un composant d'insertion et d'extraction de canaux. Le système mesure ainsi le retard de groupe différentiel sur la portion de liaison comprise entre l'entrée de la liaison et cet élément, sans perturber les signaux de tous les canaux supportés par toutes les longueurs d'onde multiplexées.

Le système de mesure peut comprendre en outre un moyen en entrée de la liaison pour tourner l'état de polarisation du signal optique modulé.

L'invention concerne également un oscilloscope numérique et un analyseur de spectre optique qui peuvent fonctionner simultanément dans un système de mesure de retard de groupe différentiel d'une liaison par fibre optique transportant un signal optique modulé de type BPSK ou DPSK par un signal numérique à un débit donné.

L'oscilloscope est caractérisé en ce qu'il comprend :
un moyen pour acquérir un diagramme de l'oeil à deux niveaux d'un signal polarisé linéairement, de type signal duo-binaire tel que défini ci-dessus, produit par une sélection d'état de polarisation d'un signal résultant d'une combinaison du signal optique modulé en phase retardé d'un retard additionnel et du signal optique modulé en phase non retardé polarisés suivant deux axes propres de polarisation orthogonaux en sortie de la liaison, le signal résultant étant polarisé sensiblement suivant l'une des bissectrices des axes propres orthogonaux,
un moyen pour déterminer un nombre maximum de points présents dans une zone de collecte du diagramme de l'oeil au cours d'une rotation au moins de l'état de polarisation du signal optique modulé sortant de la liaison, et
un moyen pour associer le retard additionnel au nombre de points déterminé.

L'analyseur de spectre optique est caractérisé en ce qu'il comprend :
un moyen pour acquérir un spectre optique d'un signal polarisé linéairement, de type signal duo-binaire tel que défini ci-dessus, produit par une sélection d'état de polarisation d'un signal résultant d'une combinaison du signal optique modulé en phase retardé d'un retard additionnel et du signal optique modulé en phase non retardé polarisés suivant deux axes propres de polarisation orthogonaux en sortie de la liaison, le signal résultant étant polarisé sensiblement suivant l'une des bissectrices des axes orthogonaux,
un moyen pour déterminer des raies d'absorption spectrales maximales localisées à la somme et à la différence entre la fréquence du signal optique et un multiple entier du demi-débit moitié au cours d'une rotation au moins de l'état de polarisation du signal optique modulé sortant de la liaison, et
un moyen pour associer le retard additionnel aux raies d'absorption spectrales maximales qui peuvent correspondre à celles délimitant un lobe central de largeur spectrale D du signal polarisé linéairement lorsque le multiple entier est égal à 1, ou à celles délimitant deux lobes secondaires de largeur spectrale D/2 situés de part et d'autre du lobe central, caractéristique d'un signal duo-binaire lorsque le multiple entier est différent de 1.

Enfin, l'invention se rapporte à un programme d'ordinateur apte à être mis en oeuvre dans un processeur, ledit programme comprenant des instructions qui, lorsque le programme est exécuté dans le processeur, réalisent les étapes conformes au procédé de l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :
- les figures 1A et 1B sont des schémas déjà commentés représentatifs de la propagation d'une impulsion d'un signal optique de type OOK dans une liaison optique respectivement sans et avec des défauts de transmission dus à la biréfringence de la liaison ;
- la figure 2 est un bloc-diagramme schématique d'un système de mesure de retard de groupe différentiel selon une première réalisation de l'invention montrée en traits pleins, et d'un autre système de mesure analogue selon une deuxième réalisation de l'invention montrée en traits pointillés ;
- la figure 3 montre des axes de polarisation orthogonaux propres à un émulateur de retard de groupe différentiel dans le système de mesure selon l'invention et deux positions possibles d'un polariseur optique orientées sensiblement à 45° des axes orthogonaux;
- la figure 4 est un diagramme de l'oeil affiché sur un oscilloscope et résultant du procédé de mesure de retard de groupe différentiel selon l'invention ;
- la figure 5 est un algorithme du procédé de mesure de retard de groupe différentiel selon l'invention ; et
- les figures 6A et 6B sont respectivement le spectre fréquentiel optique du signal modulé en phase entrant dans la liaison optique et sortant de l'émulateur sur chacun de ses axes propres orthogonaux et le spectre fréquentiel optique du signal émergeant du polariseur optique affichés sur un analyseur de spectre optique.

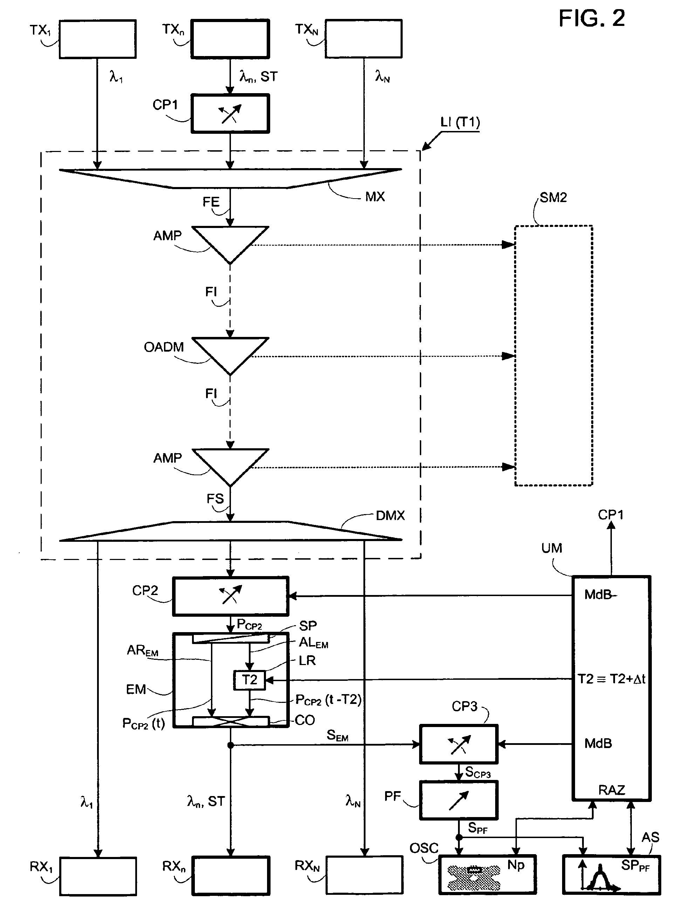

En référence à la figure 2, le système de mesure est destiné à mesurer un retard de groupe différentiel T1 dans une liaison par fibre optique LI de type à multiplexage en longueur d'onde WDM et transmettant plusieurs signaux optiques respectivement depuis des transmetteurs TX₁ à TX_{N}, également appelés transpondeurs, à des récepteurs respectifs RX₁ à RX_{N}. Les signaux ayant différentes longueurs d'ondes sortant des transmetteurs ont subi une modulation à saut de phase BPSK ou DPSK à deux états de phase. Les signaux modulés sont injectés dans la liaison LI par des ports d'entrée d'un multiplexeur MX pour y être multiplexés. La liaison LI est par exemple composée d'une première fibre optique FE transmettant les signaux modulés multiplexés, puis de fibres optiques intermédiaires FI et d'une dernière fibre optique FS reliée au port d'entrée d'un démultiplexeur DMX. Les fibres optiques FE, FI et FS sont reliées entre elles par des amplificateurs optiques AMP et un ou des composants d'insertion et d'extraction de canaux OADM jalonnant la liaison.

Selon une première réalisation de l'invention montrée en traits pleins à la figure 2, le système de mesure comprend trois contrôleurs de polarisation CP1, CP2 et CP3, un émulateur de retard de groupe différentiel EM, un polariseur fixe PF, un oscilloscope numérique à échantillonnage OSC et une unité de mesure UM.

Les entités CP1, CP2, CP3, EM, PF, OSC et UM du système sont représentées sous forme de blocs fonctionnels dont la plupart assurent des fonctions ayant un lien avec l'invention et peuvent comprendre des modules logiciels et/ou matériels.

Le retard de groupe différentiel est mesuré dans un canal de la liaison, dit canal de test, dont le signal optique a une longueur d'onde spécifique λ ₙ, avec 1 ≤ n ≤ N. Le signal optique est modulé en phase par un signal numérique constitué par une séquence de test numérique dans l'un TXₙ des transmetteurs TX₁ à TX_{N} accordé à la longueur d'onde λₙ. Le trafic dans les autres canaux ayant des signaux optiques aux autres longueurs d'onde multiplexées λ₁ à λ_{N} de la liaison optique LI n'est pas interrompu par la séquence de test. La sortie du transmetteur TXₙ est connectée à un port d'entrée du multiplexeur MX à travers le contrôleur de polarisation CP1 en entrée de la liaison optique LI. La séquence de test peut avoir un débit D de l'ordre de 10 à 40 Gbit/s correspondant à une période de bit de T = 1/D de 25 à 100 ps et être codée par exemple en binaire non retour à zéro NRZ et ainsi être modulée selon une modulation de phase NRZ-BPSK ou NRZ-DPSK à deux états de phase. Un taux d'erreur binaire de transmission est mesuré à la sortie de la liaison LI, en amont du récepteur RXₙ correspondant au transmetteur TXₙ du canal de test.

Un port de sortie du démultiplexeur DMX est connecté au récepteur RXₙ à travers successivement le contrôleur de polarisation CP2 et l'émulateur EM. La sortie de l'émulateur EM est également reliée à l'oscilloscope OSC à travers successivement le contrôleur de polarisation CP3 et le polariseur fixe PF.

Le premier contrôleur de polarisation CP1 est apte être commandé par l'unité de mesure UM pour tourner automatiquement l'état de polarisation du signal optique polarisé modulé en phase λₙ transmis par le transmetteur TXₙ dans le canal de test jusqu'à sélectionner un état de polarisation du signal optique du canal de test entrant dans la liaison optique LI qui soit aligné avec la bissectrice à 45° des axes propres de polarisation rapide et lent AR et AL à l'entrée de la liaison. La puissance du signal entrant est alors équirépartie dans des composantes orthogonales rapide et lente ayant des puissances égales sur les axes rapide et lent AR et AL à l'entrée de la liaison LI dont la position est inconnue a priori.

Puisque l'état de polarisation du signal optique se propageant dans la liaison optique LI varie le long de celle-ci à cause de sa biréfringence, l'état de polarisation du signal optique λₙ du canal de test sortant de la liaison par le démultiplexeur DMX est a priori inconnu et distinct de celui à l'entrée de la liaison. Le deuxième contrôleur de polarisation CP2 est apte être commandé par l'unité de mesure UM pour tourner automatiquement l'état de polarisation du signal optique polarisé du canal de test sortant de la liaison par le démultiplexeur jusqu'à sélectionner un état de polarisation du signal P_{CP2} sortant du contrôleur CP2 qui soit aligné avec la bissectrice à 45° des axes propres de polarisation orthogonaux lent et rapide AL_{EM} et AR_{EM} d'un séparateur biréfringent de faisceau lumineux SP à l'entrée de l'émulateur EM. Cet alignement équirépartit la puissance du signal P_{CP2} appliquée à l'émulateur EM dans des composantes orthogonales rapide et lente.

L'émulateur EM comprend par exemple en entrée le séparateur biréfringent de faisceau lumineux SP, une ligne optique LR à retard réglable T2 reliée à la sortie correspondant à l'axe de polarisation lent AL_{EM} du séparateur, et en sortie un coupleur optique 50/50 CO à maintien de polarisation ayant des entrées reliées respectivement à la sortie de la ligne à retard et directement à la sortie correspondant à l'axe de polarisation rapide AR_{EM} du séparateur d'entrée. Le séparateur SP divise équitablement en puissance le signal P_{CP2,} polarisé linéairement à 45° de ses axes propres orthogonaux, sortant du contrôleur CP2 en des composantes orthogonales rapide et lente. Le coupleur CO combine équitablement en puissance la composante lente P_{CP2} (t - T2) retardée de T2 et la composante rapide non retardée P_{CP2} (t) en un signal résultant S_{EM} appliqué au troisième contrôleur de polarisation CP3 et au récepteur RXₙ. Le retard T2 additionnel au retard T1 produit par la propagation le long de l'axe lent de la liaison optique LI, en négligeant le retard introduit par le séparateur, est introduit de manière motorisé par la ligne à retard sur la composante lente du canal de test sortant de la liaison optique LI pour que l'égalité T1 + T2 = 1/D soit satisfaite. Le débit D étant celui de la séquence de test et connu par le système de mesure comme le débit fixe des transmetteurs de la liaison LI à multiplexage en longueur d'onde WDM, le retard T1 = 1/D - T2 en est déduit.

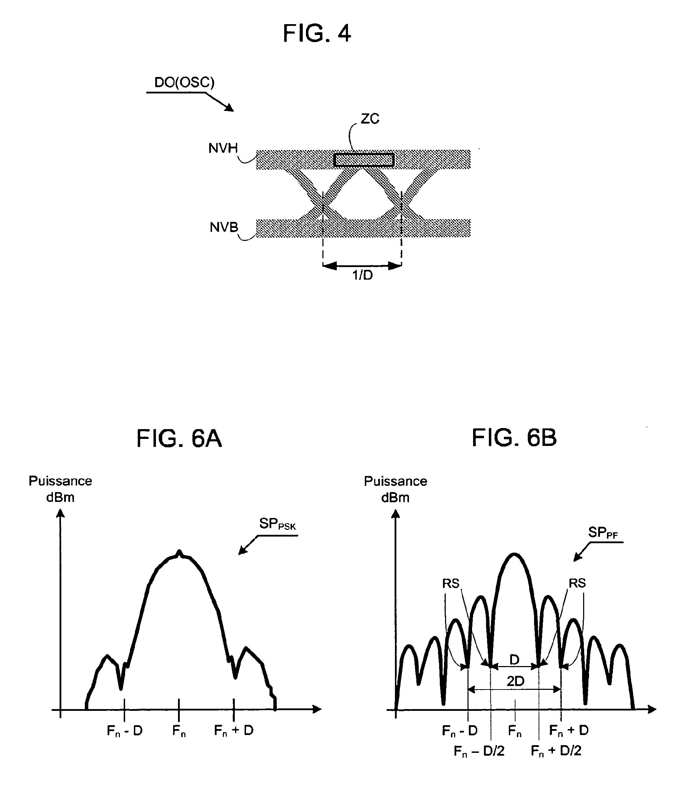

Avec les conditions précédentes, si la sortie de l'émulateur EM est reliée directement à l'oscilloscope OSC et le signal optique à la longueur d'onde λₙ du canal de test est modulé par impulsions NRZ-OOK, le signal résultant mesuré à l'oscilloscope sortant de l'émulateur présente trois niveaux d'amplitude, comme montré à la figure 4 de la demande de brevet WO 2007/074277. Le signal sortant a un niveau bas pour des états bas "0" de la composante lente retardée et de la composante rapide, un niveau intermédiaire pour l'état bas de l'une des composantes et un état haut de l'autre composante, et un niveau haut pour des états haut des deux composantes. Un maximum de contraste du niveau intermédiaire et une ouverture maximum entre les niveaux bas et haut du diagramme de l'oeil sont alors observables sur l'oscilloscope.

En revanche, lorsque le signal à la longueur d'onde λₙ du canal de test est, conformément à l'invention, modulé en phase BPSK ou DPSK à deux états de phase par la séquence de test, le signal résultant S_{EM} sortant de l'émulateur EM présente une enveloppe ayant une amplitude constante correspondant au niveau haut du signal résultant à modulation par impulsions sortant de l'émulateur selon la demande de brevet WO 2007/074277. Comme à cause de la dispersion modale de polarisation en sortie de la liaison LI, le signal S_{EM} résulte de la combinaison de deux composantes de même intensité sur les axes de polarisation orthogonaux lent et rapide AL_{EM} et AR_{EM} du séparateur SE, après avoir introduit un retard total d'une période de bit T = T1 + T2, le signal résultant S_{EM} est modulé suivant deux axes de polarisation qui sont définis par les bissectrices B1 et B2 des axes de polarisation AL_{EM} et AR_{EM}, comme montré à la figure 3. Lorsque deux bits ayant la même phase 0 ou π sont consécutifs dans le signal modulé P_{CP2} et simultanés respectivement dans le signal retardé P_{CP2} (t -T2) sur l'axe lent et le signal non retardée P_{CP2} (t) sur l'axe rapide, ils s'additionnent dans le signal S_{EM} qui est alors polarisé linéairement à 45° par rapport à l'axe rapide AR_{EM} suivant la bissectrice B1 des premier et troisième quadrants Q1 et Q3 du repère des axes de polarisation lent et rapide AL_{EM} et AR_{EM} du séparateur SP. Lorsque deux bits ayant des phases opposées 0 et π, ou π et 0, sont consécutifs dans le signal P_{CP2} et simultanés respectivement dans le signal retardé P_{CP2} (t -T2) et le signal non retardé P_{CP2} (t), ils s'additionnent dans le signal S_{EM} qui est alors polarisé linéairement à 135° par rapport à l'axe rapide AR_{EM} suivant la bissectrice B2 des deuxième et quatrième quadrants Q2 et Q4 des axes de polarisation lent et rapide AL_{EM} et AR_{EM} du séparateur SP. La puissance totale du signal résultant à modulation de phase S_{EM} est ainsi constante indépendamment des phases du signal dans le canal de test et aucun diagramme de l'oeil exploitable avec plusieurs niveaux du signal S_{EM} ne peut être produit directement par l'oscilloscope.

Le signal résultant à modulation de phase S_{EM} sortant de l'émulateur présente deux états de polarisation orthogonaux suivant les bissectrices B1 et B2 respectivement si le signal P_{CP2} contient deux bits consécutifs ayant la même phase et si le signal P_{CP2} contient deux bits consécutifs ayant des phases opposées. La modulation de phase du signal BPSK ou DPSK a été transformée en modulation de polarisation par le retard de groupe différentiel conféré par l'émulateur. Le polariseur fixe PF est propre à sélectionner l'un de ces deux états de polarisation afin de produire un signal polarisé linéairement S_{PF} comportant des impulsions correspondant à deux bits consécutifs dans le signal BPSK ou DPSK ayant la même phase si l'état de polarisation est sélectionné suivant la première bissectrice B1, ou ayant des phases opposées si l'état de polarisation est sélectionné suivant la deuxième bissectrice B2. Le troisième contrôleur de polarisation CP3 interconnecté entre la sortie de l'émulateur EM et l'entrée du polariseur fixe PF est commandé par l'unité de mesure de manière à sélectionner une orientation de l'état de polarisation du signal résultant S_{EM} pour que la moitié de l'énergie de chacun des états de polarisation orthogonaux du signal S_{EM} correspondant dans l'émulateur au signal optique modulé retardé constituant la composante lente et au signal optique modulé non retardé constituant la composante rapide passe au travers du polariseur fixe PF. Le signal polarisé "d'impulsions" S_{PF} appliqué par le polariseur fixe à l'oscilloscope OSC se présente comme un signal binaire ayant deux niveaux dont un niveau haut NVH correspondant à deux bits consécutifs dans la séquence de test ayant la même phase pour l'état de polarisation sélectionné B1, ou ayant des phases opposées pour l'état de polarisation sélectionné B2, et un niveau bas NVB pour l'état de polarisation non sélectionné, comme montré à la figure 4. Le signal S_{PF} dont l'intensité est modulée est détectable par la photodiode de la tête optique de l'oscilloscope et numérisé par un convertisseur analogique-numérique dans l'oscilloscope OSC. L'oscilloscope récupère la fréquence du signal λₙ du canal de test dans le signal polarisé détecté S_{PF} afin de synchroniser l'échantillonnage des impulsions du signal S_{PF} transmises par le polariseur fixe PF et le balayage horizontal sur l'écran de l'oscilloscope. L'oscilloscope enregistre les impulsions du signal S_{PF} et reproduit dans une fenêtre temporelle la superposition de toutes les impulsions pour construire et afficher un diagramme de l'oeil DO à deux niveaux. Le diagramme de l'oeil DO, comme montré à la figure 4, résulte de la juxtaposition d'échantillons dans une fenêtre temporelle prédéfinie, de préférence plus large que la double période 2T = 2/D des impulsions dans le signal détecté S_{PF}.

La mesure du retard de groupe différentiel T1 repose sur l'examen de l'évolution du diagramme de l'oeil DO enregistrée au cours des variations des états de polarisation produits par les trois contrôleurs de polarisation CP1, CP2 et CP3 et du retard T2 dans l'émulateur EM afin d'explorer toutes les configurations possibles des états de polarisation des trois contrôleurs jusqu'à l'affichage d'un diagramme de l'oeil ayant deux niveaux distincts présentant la plus grande ouverture pour une valeur du retard T2 fixée dans l'émulateur. L'égalité T1 + T2 = 1/D est satisfaite lorsque l'ouverture de l'oeil dans le diagramme DO affiché par l'oscilloscope atteint un maximum. En admettant que les états de polarisation soient réglés convenablement dans les contrôleurs de polarisation, une variation du retard T2 en valeur absolue à partir de la valeur zéro dans l'émulateur fait apparaître progressivement un diagramme de l'oeil DO de plus en plus ouvert.

L'ouverture maximale du diagramme de l'oeil DO peut être décelée automatiquement par un comptage du nombre Np de points d'image (pixels) dans une zone de collecte ZC située sur l'un des niveaux du diagramme de l'oeil. Par exemple, la zone ZC est préprogrammée dans l'oscilloscope par un technicien et est située sur le niveau haut NVH du diagramme de l'oeil DO, comme montré à la figure 4. Les points sont accumulés pendant un temps d'acquisition du diagramme de l'oeil jusqu'à atteindre une ouverture maximale de l'oeil.

L'unité de mesure UM commande les contrôleurs de polarisation CP1, CP2 et CP3, l'émulateur EM et l'oscilloscope OSC du système de mesure. L'unité UM commande le mode de brouillage MdB des contrôleurs, fait varier la valeur du retard additionnel T2 par incrémentation, transmet le retard incrémenté à l'émulateur EM et commande une remise à zéro RAZ du nombre de points Np dans l'oscilloscope OSC au début de chaque acquisition du diagramme de l'oeil DO. Pour déterminer le retard de groupe différentiel T1, l'unité de mesure UM établit le tracé d'une courbe monotone croissante correspondant au nombre Np de points présents dans la zone de collecte ZC transmis par l'oscilloscope OSC en fonction du retard additionnel T2 dont la valeur varie progressivement de zéro à au plus une valeur sensiblement égale à T = 1/D. Plus le retard cumulé T1 + T2 croît vers la période de bit, plus les impulsions dans le signal S_{PF} sont distinctes. Un premier maximum du nombre de points Np détecté par l'unité UM correspond au retard additionnel T2 pour lequel T1 + T2 = 1/D.

En variante, l'oscilloscope OSC est inclus dans l'unité de mesure UM.

Les alignements recherchés à 45° des états de polarisation des contrôleurs CP1 et CP2 respectivement avec les bissectrices des axes lent et rapide à l'entrée de la liaison LI et devant le séparateur SP de l'émulateur EM ne sont pas critiques et peuvent tolérer des écarts d'environ ± 15°. Il en est de même pour la sélection de l'état de polarisation du signal résultant S_{EM} sensiblement suivant l'une des bissectrices B1 et B2 au travers du polariseur fixe PF par le contrôleur CP3.

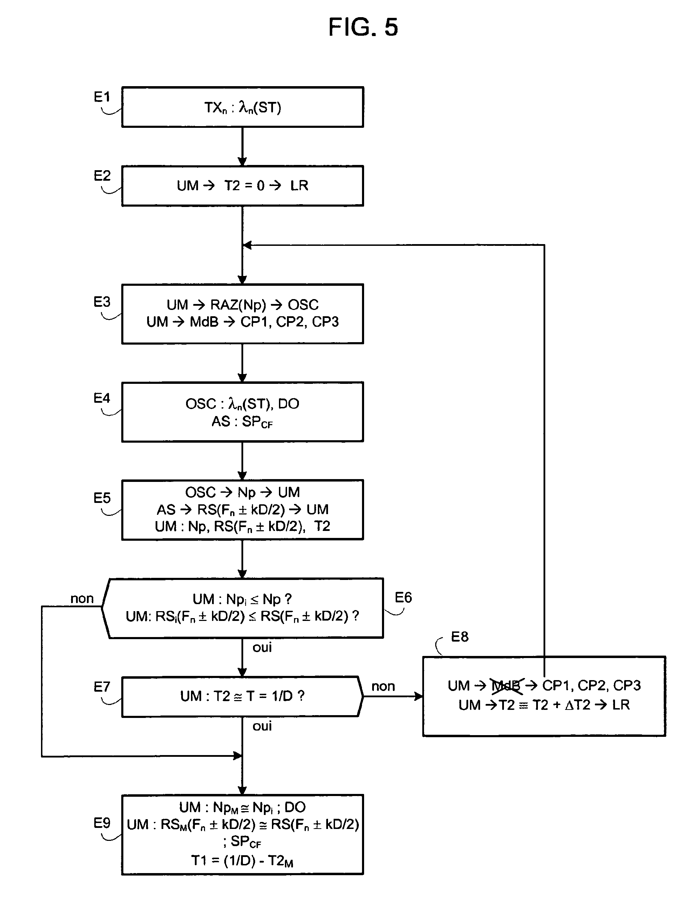

Le procédé de mesure du retard de groupe différentiel d'une liaison optique comprend des étapes E1 à E9 montrées à la figure 5.

A l'étape E1, le transmetteur TXₙ est activé pour transmettre un signal à la longueur d'onde λₙ modulé en phase au format BPSK ou DPSK à deux états de phase par la séquence de test numérique ST.

A l'étape E2, l'unité de mesure UM met à zéro le retard additionnel T2 de la ligne à retard variable LR dans l'émulateur EM.

Les étapes E3 à E8 sont itératives pour des valeurs successives du retard additionnel T2.

A l'étape E3, l'unité de mesure UM transmet une commande de remise à zéro RAZ du nombre de point Np dans un module de comptage inclus dans l'oscilloscope OSC, télécommande l'activation en mode de brouillage MdB du premier contrôleur CP1 à l'extrémité d'entrée de la liaison LI et commande en mode de brouillage MdB les deuxième et troisième contrôleurs CP2 et CP3 à l'extrémité de sortie de la liaison LI. Comme les orientations des axes principaux de polarisation de la liaison, de l'émulateur et du polariseur fixe sont inconnues et en plus sont modifiées au cours du temps et dépendent de la longueur d'onde, les rotations des axes de polarisation des contrôleurs en mode de brouillage sont commandées indépendamment les unes des autres afin d'explorer toutes les configurations possibles des états de polarisation de l'entrée et la sortie de la liaison et de l'émulateur et ainsi sélectionner l'état de polarisation du signal résultant S_{EM} permettant de placer la moitié de son énergie suivant l'une des bissectrices B1 ou B2 des axes orthogonaux du séparateur SP.

A l'étape E4, l'oscilloscope OSC affiche en continu un diagramme de l'oeil DO évoluant selon la variation des états de polarisation des contrôleurs. Dans l'oscilloscope, la photodiode détecte le signal polarisé S_{PF} sortant du polariseur fixe PF et une base de temps récupère la fréquence de la séquence de test afin de synchroniser l'échantillonnage de la séquence de test ST reçue et le balayage horizontal sur l'écran de l'oscilloscope. La période d'acquisition et d'affichage du diagramme de l'oeil complet DO est supérieure à la période de balayage des états de polarisation appliqués par les contrôleurs CP1, CP2 et CP3 sur la séquence de test afin que tous les états de polarisation correspondant à des orientations d'axes de polarisation de 45° par rapport à l'entrée et la sortie de la liaison LI et de l'émulateur EM soient représentés dans le diagramme. Après une acquisition stable du diagramme de l'oeil DO avec deux niveaux NVH et NVB de plus grande ouverture et son enregistrement dans l'oscilloscope OSC, le module de comptage dans l'oscilloscope détermine le nombre Np de points présents dans la zone de collecte ZC située dans l'un des niveaux bas et haut du diagramme de l'oeil, par exemple le niveau haut NVH.

A l'étape E5, le nombre Np est ensuite transmis par l'oscilloscope OSC à l'unité de mesure UM qui l'enregistre en association au retard additionnel T2 introduit par l'émulateur dans une table de correspondance. L'oscilloscope affiche cette association sous forme d'un point de tracé dans un repère de coordonnées à l'écran de l'unité de mesure.

A l'étape E6, l'unité de mesure UM compare le nombre de point Np qui vient d'être déterminé au nombre de point Npᵢ enregistré lors de l'itération précédente des étapes E3 à E8. Si Npᵢ ≤ Np, la recherche d'un maximum du nombre de point Np continue en passant à l'étape E7 à laquelle l'unité de mesure vérifie que le retard variable T2 n'est pas sensiblement égal à la période de bit T. Si T2 < T, l'unité de mesure arrête le brouillage des contrôleurs de polarisation CP1, CP2 et CP3 et incrémente en valeur absolue la valeur du retard additionnel, soit T2 = T2 + ΔT2, à l'étape E8, de manière à rechercher un agrandissement de l'ouverture du diagramme de l'oeil DO et à trouver un nombre de point Np encore plus grand. Les étapes E3 à E6 ou E7 sont réitérées pour relancer le cycle de brouillage des contrôleurs de brouillage avec le retard additionnel incrémenté afin de trouver la valeur de T2 associée à une ouverture maximale des diagrammes de l'oeil affichés.

Si Np ≅ Npᵢ à l'étape E6 ou T2 ≅ T à l'étape E7, l'unité de mesure UM détermine le retard additionnel T2_{M} correspondant au premier maximum Np_{M} = NPᵢ du nombre de points rencontré dans la table de correspondance reflétant l'ouverture maximale des diagrammes de l'oeil, à l'étape E9. L'unité UM soustrait le retard additionnel T2_{M} à la période de bit T = 1/D pour en déduire le retard de groupe différentiel T1, à l'étape E9.

En variante, le troisième contrôleur de polarisation CP3 et le polariseur fixe CF constituant un moyen pour transformer le signal à modulation de phase S_{EM} en le signal S_{PF} dont l'intensité est modulée, sont remplacés par un polariseur orientable monté sur un barillet motorisé. L'axe de rotation du barillet perpendiculaire au plan de polarisation du polariseur orientable est tourné de manière à aligner l'état de polarisation du polariseur orientable avec l'état de polarisation sélectionné B1 ou B2 du signal S_{EM} sortant de l'émulateur. Dans le procédé de mesure, au lieu de commander le mode de brouillage MdB du contrôleur de polarisation CP3, l'unité de mesure UM commande la rotation du polariseur.

La mesure du retard de groupe T1 est relativement rapide, de l'ordre de quelques minutes. Plusieurs retards T1 de la liaison sont répétitivement déterminés selon les étapes E1 à E9 pour plusieurs canaux de la liaison et durant une période relativement longue de plusieurs heures ou jours afin d'estimer la dispersion modale de polarisation PDM de la liaison LI en moyennant les retards déterminés.

Simultanément à la mesure d'un retard de groupe différentiel à un instant donné, le récepteur RXₙ correspondant au canal de test peut relever des valeurs de taux d'erreur numérique de transmission et estimer ainsi la marge de fonctionnement relative au retard de groupe différentiel de la liaison.

L'observation du diagramme de l'oeil DO à l'oscilloscope OSC peut être remplacée ou complétée par l'observation du spectre optique SP du signal polarisé S_{PF} sortant du polariseur fixe PF, ou du polariseur orientable monté sur un barillet motorisé, au moyen d'un analyseur de spectre optique AS à haute résolution. L'analyseur de spectre enregistre les lobes de modulation entre les fréquences Fₙ - kD/2 et Fₙ + kD/2 avec Fₙ = c/λₙ du signal S_{PF}, c étant la vitesse de la lumière et k étant un nombre entier égal ou supérieur à 1, par exemple compris entre 1 et 5.

Lorsque le retard de groupe différentiel est nul ou faible devant la période T des bits du signal numérique ST, le spectre fréquentiel SP_{PSK} du signal résultant S_{EM} sortant de l'émulateur EM présente un unique lobe central entre les fréquences Fₙ - D et Fₙ + D, comme illustré à la figure 6A pour un signal modulé selon une modulation de phase par exemple du type NRZ-DPSK.

Lorsque l'unité de mesure UM commande les contrôleurs de polarisation CP1, CP2 et CP3 en mode de brouillage MdB par l'unité de mesure UM et ainsi la rotation des axes de transmission des contrôleurs de polarisation à l'étape E3 et augmente pas à pas la valeur du retard de groupe différentiel affichée T2 = T2 + ΔT2 dans l'émulateur EM à l'étape E8, l'unité de mesure recherche dans l'analyseur AS à l'étape E4 un spectre SP_{PF} qui se rapproche de celui d'un signal à modulation directe par impulsion de type duo-binaire, tel que représenté à la figure 6B.

En particulier, le signal à intensité modulée par impulsion SP_{PF} de type duo-binaire se caractérise par plusieurs lobes de modulation dont un lobe central et des paires de lobes secondaires symétriques. Le lobe central et les deux premiers secondaires jouxtant le lobe central présentent des puissances spectrales les plus grandes et sont donc retenus pour caractériser le signal polarisé SP_{PF}, bien qu'au moins le lobe central ou l'une des paires de lobes secondaires soit a priori suffisant pour caractériser le signal polarisé SP_{PF}. Le lobe central est compris entre les fréquences Fₙ - D/2 et Fₙ + D/2, a une largeur D et est centré sur la fréquence Fₙ. Les deux premiers lobes secondaires ont une largeur D/2 et s'étendent entre les fréquences Fₙ - D et Fₙ - D/2 et les fréquences Fₙ + D/2 et Fₙ + D. L'analyseur de spectre optique affiche à l'étape E4 au moins le lobe central et les deux premiers lobes secondaires de sorte qu'entre les fréquences Fₙ - D et Fₙ + D on observe quatre raies d'absorption RS aux fréquences Fₙ - D/2 et Fₙ + D/2, ce qui correspond à k = 1, et aux fréquences Fₙ - D et Fₙ + D, ce qui correspond à k = 2, délimitant les trois lobes précédents, au fur et à mesure que le retard de groupe différentiel total T1 + T2 tend vers T = 1/D. A l'étape E5, les amplitudes des raies d'absorption RS aux fréquences Fₙ - D, Fₙ - D/2, Fₙ + D/2 et Fₙ + D sont transmises par l'analyseur AS à l'unité de mesure UM qui les enregistre en association au retard additionnel T2 introduit par l'émulateur dans une table de correspondance. A l'étape E6, l'unité de mesure UM compare les amplitudes des raies d'absorption RS aux fréquences Fₙ-D, Fₙ-D/2, Fₙ+D/2 et Fₙ + D qui viennent d'être déterminées aux amplitudes des raies spectrales d'absorption RSᵢ aux fréquences Fₙ - D, Fₙ - D/2, Fₙ + D/2 et Fₙ + D enregistrées lors de l'itération précédente des étapes E3 à E6. Lorsque les quatre raies d'absorption atteignent des valeurs maximales à l'étape E6, c'est-à-dire si RSi (Fₙ ± kD/2) ≤ RS (Fₙ ± kD/2) avec k égal à 1 ou 2, des maximums sont recherchés plus finement en passant par l'étape E7 pour que l'unité de mesure UM arrête le fonctionnement des contrôleurs de polarisation CP1, CP2 et CP3 et incrémente en valeur absolue la valeur du retard additionnel T2 dans l'émulateur, à l'étape E8. Finalement si RS (Fₙ ± kD/2) ≅ RSᵢ (Fₙ ± kD/2) à l'étape E6 ou T2 ≅ T à l'étape E7, l'unité de mesure UM détermine le retard additionnel T2_{M} correspondant au premier maximum RS_{M} (Fₙ ± kD/2) = CPᵢ (Fₙ ± kD/2) des amplitudes des composantes spectrales rencontrées, à l'étape E9.

Comme montré à la figure 2, les mesures et affichages par l'oscilloscope OSC peuvent être simultanés à ceux par l'analyseur de spectre AS.

Le système de mesure selon l'invention comprend des appareils de métrologie optoélectroniques d'usage courant, comme des contrôleurs de polarisation, un émulateur de retard de groupe différentiel, un oscilloscope numérique et /ou un analyseur de spectre optique, tout comme les transmetteurs, récepteurs et autres éléments intermédiaires déjà présents aux extrémités de la liaison optique LI et dans celle-ci.

Un seul canal de multiplexage optique est utilisé pour la détermination du retard de groupe différentiel T1 de la liaison, le trafic des autres canaux n'étant pas perturbé par la mesure.

Selon une deuxième réalisation, le système de mesure SM2 mesure le retard de groupe différentiel d'une liaison optique constituée par une portion de la liaison optique LI située entre l'entrée MX de la liaison et une sortie de surveillance de l'un des éléments de la liaison, tels qu'un amplificateur optique AMP et un composant OADM, à connecter au système de mesure SM2, comme montré en traits pointillés à la figure 2. En outre, le procédé de mesure du retard de groupe différentiel est appliqué indifféremment sur l'un des canaux optiques de la liaison optique LI. Le système de mesure comprend, comme dans la première réalisation, successivement un contrôleur de polarisation CP2, un émulateur de retard de groupe différentiel EM, un contrôleur de polarisation CP3 et un polariseur fixe PF, ou un polariseur orientable monté sur un barillet, un oscilloscope OSC et/ou un analyseur de spectre optique AS, et une unité de mesure UM. Le système SM2 comprend également en entrée, entre la sortie de surveillance de l'élément de la liaison AMP ou OADM et le contrôleur CP2, un amplificateur optique relié à un filtre accordable. Le filtre accordable est piloté par une commande de sélection transmise par l'unité de mesure pour sélectionner la longueur d'onde de l'un des signaux optiques multiplexés dans la liaison optique LI. Le procédé de mesure de retard de groupe différentiel selon la deuxième réalisation est en partie analogue au procédé selon la première réalisation, en particulier pour les étapes E2 à E9. A la première étape du procédé, en remplacement de la transmission périodique de la séquence de test ST par le transmetteur TXₙ et de l'activation du contrôleur CP1 en mode de brouillage MdB, le filtre est accordé sur la longueur d'onde sélectionnée par un identificateur inclus dans une commande transmise par l'unité de mesure.

Le signal généré en entrée de la liaison pour la mesure du retard T1 n'est pas un signal numérique de test, mais un signal numérique contenant des données de trafic réel à transmettre. Ainsi, aucun des canaux optiques de la liaison optique LI n'est perturbé par la mesure.

L'invention décrite ici concerne un procédé et un système de mesure automatique du retard de groupe différentiel d'une portion de liaison par fibre optique. Selon une implémentation, les étapes du procédé de l'invention sont déterminées par les instructions d'un programme d'ordinateur incorporé dans un processeur du système de mesure. Le programme comporte des instructions de programme qui, lorsque ledit programme est exécuté dans le processeur dont le fonctionnement est alors commandé par l'exécution du programme, réalisent les étapes du procédé selon l'invention.

En conséquence, l'invention s'applique également à un programme d'ordinateur, notamment un programme d'ordinateur enregistré sur ou dans un support d'enregistrement lisible par un ordinateur et tout dispositif de traitements de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'enregistrement peut être n'importe quelle entité ou dispositif capable de stocker le programme. Par exemple, le support peut comporter un moyen de stockage sur lequel est enregistré le programme d'ordinateur selon l'invention, tel qu'une ROM, par exemple un CD-ROM ou une ROM de circuit microélectronique, ou encore une clé USB, ou un moyen d'enregistrement magnétique, par exemple une disquette (floppy disc) ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'enregistrement peut être un circuit intégré dans lequel le programme est incorporé, le circuit étant adapté pour exécuter ou pour être utilisé dans l'exécution du procédé selon l'invention.

## Revendications

1. Procédé de mesure de retard de groupe différentiel (T1) d'une liaison (LI) par fibre optique transportant un signal optique (λₙ) modulé par un signal numérique (ST) à un débit donné, comprenant une rotation (E3) de l'état de polarisation du signal optique modulé (P_{CP2}) sortant de la liaison, une introduction (E5) d'un retard additionnel (T2) dans le signal optique modulé, une combinaison du signal optique modulé retardé (P_{CP2}(t - T2)) et du signal optique modulé non retardé (P_{CP2}(t)) polarisés suivant deux composantes orthogonales (AL_{EM}, AR_{EM}) en un signal résultant optique (S_{EM}), et une détermination (E9) du retard de groupe différentiel de la liaison optique égal à la différence entre l'inverse du débit donné et le retard additionnel, le procédé comprenant aussi les étapes suivantes :
une modulation de phase (E1) du signal optique (λₙ) par le signal numérique (ST) en entrée de la liaison, et
une sélection (E3) de l'état de polarisation du signal résultant (S_{EM}) suivant l'une des bissectrices (B1, B2) des axes orthogonaux (AL_{EM}, AR_{EM}) en un signal polarisé linéairement (S_{PF}),
la détermination (E4-E9) du retard de groupe différentiel dépendant de caractéristique du signal polarisé.

2. Procédé conforme à la revendication 1, selon lequel la sélection comprend une rotation de l'état de polarisation du signal résultant (S_{EM}) de manière à ne laisser passer que la moitié de l'énergie de chacun des états de polarisation suivant les axes orthogonaux du signal résultant (S_{EM}) au travers d'un polariseur optique fixe (PF).

3. Procédé conforme à la revendication 1, selon lequel la sélection comprend une rotation d'un polariseur orientable pour aligner l'axe de polarisation du polariseur orientable sensiblement avec ladite une des bissectrices (B1, B2).

4. Procédé conforme à la revendication 1, selon lequel la détermination du retard de groupe différentiel comprend
une acquisition (E4) d'un diagramme de l'oeil (DO) à deux niveaux du signal polarisé (S_{PF}) correspondant aux états de polarisation et au retard additionnel introduit dans le signal optique modulé,
une maximisation (E5) d'un nombre (Np) de points présents dans une zone de collecte (ZC) du diagramme de l'oeil par rotation au moins de l'état de polarisation du signal optique modulé (P_{CP2}) sortant de la liaison,
une association (E5) du retard additionnel au nombre de points maximisé,
une incrémentation (E8) du retard additionnel et une itération des étapes précédentes tant que le nombre de points (Np) n'a pas atteint au moins un nombre maximum (Np_{M}), et
si le nombre maximum est atteint (E6), une détermination (E9) du retard de groupe différentiel (T1) de la liaison optique égal à la différence entre l'inverse du débit donné et le retard additionnel (T2_{M}) associé au nombre maximum.

5. Procédé conforme à la revendication 1, selon lequel la détermination du retard de groupe différentiel comprend
une acquisition (E4) d'un spectre (SP_{PF}) du signal polarisé (S_{PF}) correspondant aux états de polarisation et au retard additionnel introduit dans le signal optique modulé,
une maximisation (E5) de l'amplitude de raies d'absorption spectrales localisées à la somme et à la différence entre la fréquence (Fₙ) du signal optique et un multiple entier du demi-débit (Fₙ ± kD/2) donné par rotation au moins de l'état de polarisation du signal optique modulé (P_{CP2}) sortant de la liaison,
une association (E5) du retard additionnel aux raies d'absorption spectrales maximisées,
une incrémentation (E8) du retard additionnel et une itération des étapes précédentes tant que les raies d'absorption spectrales n'ont pas atteintes des amplitudes maximales (RS_{M}(Fₙ ± kD/2)), et
si les amplitudes maximales sont atteintes (E6), une détermination (E9) du retard de groupe différentiel (T1) de la liaison optique égal à la différence entre l'inverse du débit donné (D) et le retard additionnel (T2_{M}) associé aux amplitudes maximales.

6. Procédé conforme à la revendication 1, comprenant une rotation (E3) de l'état de polarisation du signal optique modulé (λₙ) en entrée (CP1) de la liaison optique.

7. Système de mesure de retard de groupe différentiel (T1) d'une liaison (LI) par fibre optique transportant un signal optique (λₙ) modulé par un signal numérique (ST) à un débit donné, comprenant un moyen (CP2) pour tourner l'état de polarisation du signal optique modulé (P_{CP2}) sortant de la liaison, un moyen (LR) pour introduire un retard additionnel (T2) dans le signal optique modulé, un moyen (EM) pour combiner le signal optique modulé retardé (P_{CP2}(t - T2)) et le signal optique modulé non retardé (P_{CP2}(t)) polarisés suivant deux composantes orthogonales (AL_{EM}, AR_{EM}) en un signal résultant optique (S_{EM}), et un moyen (OSC, AS, UM) pour déterminer le retard de groupe différentiel de la liaison optique égal à la différence entre l'inverse du débit donné et le retard additionnel, le système comprenant aussi :
un moyen (TXₙ) en entrée de la liaison pour moduler en phase le signal optique (λₙ) par le signal numérique (ST), et
un moyen (CP3, PF) pour sélectionner l'état de polarisation du signal résultant (S_{EM}) suivant l'une des bissectrices (B1, B2) des axes orthogonaux (AL_{EM}, AR_{EM}) en un signal polarisé linéairement (S_{PF}),
le moyen pour déterminer (OSC, AS, UM) étant apte à déterminer le retard de groupe différentiel en dépendance de caractéristique du signal polarisé.

8. Système conforme à la revendication 7, dans lequel le moyen pour sélectionner comprend un polariseur fixe (PF) et un moyen (CP3) pour tourner l'état de polarisation du signal résultant (S_{EM}) de manière à ne laisser passer que sensiblement la moitié de l'énergie de chacun des états de polarisation orthogonaux du signal résultant (S_{EM}) au travers du polariseur fixe (PF).

9. Système conforme à la revendication 7, dans lequel le moyen pour sélectionner comprend un polariseur orientable apte être tourné pour aligner l'axe de polarisation du polariseur orientable avec ladite une des bissectrices (B1, B2).

10. Système conforme à la revendication 7, dans lequel le moyen pour déterminer comprend un oscilloscope numérique (OSC) pour acquérir un diagramme de l'oeil (DO) du signal polarisé (S_{PF})

11. Système conforme à la revendication 7, dans lequel le moyen pour déterminer comprend un analyseur de spectre optique (AS) pour acquérir un spectre optique (SP_{PF}) du signal polarisé (S_{PF}).

12. Système conforme à la revendication 7, comprenant un moyen (CP1) en entrée (CP1) de la liaison optique pour tourner l'état de polarisation du signal optique modulé (λₙ).

13. Oscilloscope numérique (OSC) dans un système de mesure de retard de groupe différentiel (T1) d'une liaison (LI) par fibre optique transportant un signal optique (λₙ) modulé par un signal numérique (ST) à un débit donné, **caractérisé en ce qu'**il comprend :
un moyen pour acquérir un diagramme de l'oeil à deux niveaux (DO) d'un signal polarisé linéairement (S_{PF}) produit par une sélection d'état de polarisation d'un signal (S_{EM}) résultant d'une combinaison du signal optique modulé en phase retardé (P_{CP2}(t - T2)) d'un retard additionnel (T2) et du signal optique modulé en phase non retardé (P_{CP2}(t)) polarisés suivant deux axes propres de polarisation orthogonaux (AL_{EM}, AR_{EM}) en sortie de la liaison, le signal résultant étant polarisé sensiblement suivant l'une des bissectrices (B1, B2) des axes orthogonaux (AL_{EM}, AR_{EM}),
un moyen pour déterminer un nombre maximum (Np) de points présents dans une zone de collecte (ZC) du diagramme de l'oeil au cours d'une rotation au moins de l'état de polarisation du signal optique modulé (P_{CP2}) sortant de la liaison, et
un moyen pour associer le retard additionnel au nombre maximum de points déterminé.

14. Analyseur de spectre optique (AS) dans un système de mesure de retard de groupe différentiel (T1) d'une liaison (LI) par fibre optique transportant un signal optique (λₙ) modulé par un signal numérique (ST) à un débit donné, **caractérisé en ce qu'**il comprend :
un moyen pour acquérir un spectre optique (SP_{PF}) d'un signal polarisé linéairement (S_{PF}) produit par une sélection d'état de polarisation d'un signal (S_{EM}) résultant d'une combinaison du signal optique modulé en phase retardé (P_{CP2}(t - T2)) d'un retard additionnel (T2) et du signal optique modulé en phase non retardé (P_{CP2}(t)) polarisés suivant deux axes propres de polarisation orthogonaux (AL_{EM}, AR_{EM}) en sortie de la liaison, le signal résultant étant polarisé sensiblement suivant l'une des bissectrices (B1, B2) des axes orthogonaux (AL_{EM}, AR_{EM}),
un moyen pour déterminer des raies d'absorption spectrales maximales localisées à la somme et à la différence entre la fréquence du signal optique (Fₙ) et un multiple entier du demi-débit moitié (Fₙ ± kD/2) au cours d'une rotation au moins de l'état de polarisation du signal optique modulé (P_{CP2}) sortant de la liaison, et
un moyen pour associer le retard additionnel aux raies d'absorption spectrales maximales.

15. Programme d'ordinateur comprenant des instructions pour la mise en oeuvre du procédé selon la revendication 1, lorsque le programme est exécuté par un processeur.

16. Support d'enregistrement lisible par un ordinateur sur lequel est enregistré un programme d'ordinateur comprenant des instructions pour l'exécution des étapes du procédé selon la revendication 1.

## Claims

1. Method for measuring the differential group delay (T1) of a fibre optic link (LI) transporting an optical signal (λₙ) modulated by a digital signal (ST) at a given bit rate, comprising a rotation (E3) of the polarization state of the modulated optical signal (P_{CP2}) outgoing from the link, an introduction (E5) of an additional delay (T2) into the modulated optical signal, a combination of the delayed modulated optical signal (P_{CP2}(t - T2)) and of the non-delayed modulated optical signal (P_{CP2}(t)) polarized according to two orthogonal components (AL_{EM}, AR_{EM}) in a resultant optical signal (S_{EM}), and a determination (E9) of the differential group delay of the optical link equal to the difference between the inverse of the given bit rate and the additional delay, the method also comprising the following steps:
a phase modulation (E1) of the optical signal (λₙ) by the digital signal (ST) at the input of the link, and
a selection (E3) of the polarization state of the resultant signal (S_{EM}) according to one of the bisectors (B1, B2) of the orthogonal axes (AL_{EM}, AR_{EM}) in a linearly polarized signal (S_{PF}),
the determination (E4-E9) of the differential group delay depending on characteristic of the polarized signal.

2. Method according to Claim 1, according to which the selection comprises a rotation of the polarization state of the resultant signal (S_{EM}) so as to allow only half the energy of each of the polarization states according to the orthogonal axes of the resultant signal (S_{EM}) to pass through a fixed optical polarizer (PF).

3. Method according to Claim 1, according to which the selection comprises a rotation of an orientable polarizer to align the polarization axis of the orientable polarizer substantially with said one of the bisectors (B1, B2).

4. Method according to Claim 1, according to which the determination of the differential group delay comprises
an acquisition (E4) of an eye pattern (DO) at two levels of the polarized signal (S_{PF}) corresponding to the polarization states and to the additional delay introduced into the modulated optical signal,
a maximization (E5) of a number (Np) of points present in a collection region (ZC) of the eye pattern by rotation at least of the polarization state of the modulated optical signal (P_{CP2}) outgoing from the link,
an association (E5) of the additional delay with the maximized number of points,
an incrementation (E8) of the additional delay and an iteration of the preceding steps for as long as the number of points (Np) has not reached at least a maximum number (Np_{M}), and
if the maximum number is reached (E6), a determination (E9) of the differential group delay (T1) of the optical link equal to the difference between the inverse of the given bit rate and the additional delay (T2_{M}) associated with the maximum number.

5. Method according to Claim 1, according to which the determination of the differential group delay comprises
an acquisition (E4) for a spectrum (SP_{PF}) of the polarized signal (S_{PF}) corresponding to the polarization states and to the additional delay introduced into the modulated optical signal,
a maximization (E5) of the amplitude of spectral absorption rays located at the sum and at the difference between the frequency (Fₙ) of the optical signal and an integer multiple of the half-bit rate (Fₙ ± kD/2) given by rotation at least of the polarization state of the modulated optical signal (P_{CP2}) outgoing from the link,
an association (E5) of the additional delay with the maximized spectral absorption rays,
an incrementation (E8) of the additional delay and an iteration of the preceding steps as long as the spectral absorption rays have not reached maximum amplitudes (RS_{M}(Fₙ ± kD/2)), and
if the maximum amplitudes are reached (E6), a determination (E9) of the differential group delay (T1) of the optical link equal to the difference between the inverse of the given bit rate (D) and the additional delay (T2_{M}) associated with the maximum amplitudes.

6. Method according to Claim 1, comprising a rotation (E3) of the polarization state of the modulated optical signal (λₙ) at the input (CP1) of the optical link.

7. System for measuring the differential group delay (T1) of a fibre optic link (LI) transporting an optical signal (λₙ) modulated by a digital signal (ST) at a given bit rate, comprising a means (CP2) for rotating the polarization state of the modulated optical signal (P_{CP2}) outgoing from the link, a means (LR) for introducing an additional delay (T2) into the modulated optical signal, a means (EM) for combining the delayed modulated optical signal (P_{CP2}(t - T2)) and the non-delayed modulated optical signal (P_{CP2}(t)) polarized according to two orthogonal components (AL_{EM}, AR_{EM}) in a resultant optical signal (S_{EM}), and a means (OSC, AS, UM) for determining the differential group delay of the optical link equal to the difference between the inverse of the given bit rate and the additional delay, the system also comprising:
a means (TXₙ) at the input of the link for phase modulating the optical signal (λₙ) by the digital signal (ST), and
a means (CP3, PF) for selecting the polarization state of the resultant signal (S_{EM}) according to one of the bisectors (B1, B2) of the orthogonal axes (AL_{EM}, AR_{EM}) in a linearly polarized signal (S_{PF}),
the means for determining (OSC, AS, UM) being capable of determining the differential group delay in dependence on characteristic of the polarized signal.

8. System according to Claim 7, in which the means for selecting comprises a fixed polarizer (PF) and a means (CP3) for rotating the polarization state of the resultant signal (S_{EM}) so as to allow only substantially half the energy of each of the orthogonal polarization states of the resultant signal (S_{EM}) to pass through the fixed polarizer (PF).

9. System according to Claim 7, in which the means for selecting comprises an orientable polarizer which can be rotated to align the polarization axis of the orientable polarizer with said one of the bisectors (B1, B2).

10. System according to Claim 7, in which the means for determining comprises a digital oscilloscope (OSC) for acquiring an eye pattern (DO) of the polarized signal (S_{PF}).

11. System according to Claim 7, in which the means for determining comprises an optical spectrum analyser (AS) for acquiring an optical spectrum (SP_{PF}) of the polarized signal (S_{PF}).

12. System according to Claim 7, comprising a means (CP1) at the input of the optical link for rotating the polarization state of the modulated optical signal (λₙ).

13. Digital oscilloscope (OSC) in a system for measuring differential group delay (T1) of a fibre optic link (LI) transporting an optical signal (λₙ) modulated by a digital signal (ST) at a given bit rate, **characterized in that** it comprises:
a means for acquiring an eye pattern at two levels (DO) of a linearly polarized signal (S_{PF}) produced by a selection of the polarization state of a signal (S_{EM}) resulting from a combination of the phase modulated optical signal delayed (P_{CP2} (t - T2)) by an additional delay (T2) and of the non-delayed phase modulated optical signal (P_{CP2}(t)) polarized according to two specific orthogonal polarization axes (AL_{EM}, AR_{EM}) at the output of the link, the resultant signal being polarized substantially according to one of the bisectors (B1, B2) of the orthogonal axes (AL_{EM}, AR_{EM}),
a means for determining a maximum number (Np) of points present in a collection region (ZC) of the eye pattern during rotation at least of the polarization state of the modulated optical signal (P_{CP2}) outgoing from the link, and
a means for associating the additional delay with the determined maximum number of points.

14. Optical spectrum analyser (AS) in a system for measuring differential group delay (T1) of a fibre optical link (LI) transporting an optical signal (λₙ) modulated by a digital signal (ST) at a given bit rate, **characterized in that** it comprises:
a means for acquiring an optical spectrum (SP_{PF}) of a linearly polarized signal (S_{PF}) produced by a selection of polarization state of a signal (S_{EM}) resulting from a combination of the phase modulated optical signal (P_{CP2} (t - T2)) delayed by an additional delay (T2) and of the non-delayed phase modulated optical signal (P_{CP2}(t)), polarized according to two specific orthogonal polarization axes (AL_{EM}, AR_{EM}) at the output of the link, the resultant signal being polarized substantially according to one of the bisectors (B1, B2) of the orthogonal axes (AL_{EM}, AR_{EM}),
a means for determining maximum spectral absorption rays located at the sum and at the difference between the frequency of the optical signal (Fₙ) and an integer multiple of the half-bit rate (Fₙ ± kD/2) during a rotation at least of the polarization state of the modulated optical signal (P_{CP2}) outgoing from the link, and
a means for associating the additional delay with the maximum spectral absorption rays.

15. Computer program comprising instructions for implementing the method according to Claim 1, when the program is run by a processor.

16. Computer-readable storage medium on which is stored a computer program, comprising instructions for the execution of the steps of the method according to Claim 1.

## Patentansprüche

1. Verfahren zur Messung einer differentiellen Gruppenlaufzeit (T1) einer Lichtleitfaser-Verbindung (LI), die ein von einem digitalen Signal (ST) moduliertes optisches Signal (λₙ) mit einer gegebenen Übertragungsrate befördert, das eine Drehung (E3) des Polarisationszustands des aus der Verbindung austretenden modulierten optischen Signals (P_{CP2}), eine Einführung (E5) einer zusätzlichen Verzögerung (T2) in das modulierte optische Signal, eine Kombination des verzögerten modulierten optischen Signals (P_{CP2}(t-T2)) und des nicht verzögerten modulierten optischen Signals (P_{CP2}(t), die gemäß zwei orthogonalen Komponenten (AL_{EM}, AR_{EM}) polarisiert sind, in einem resultierenden optischen Signal (S_{EM}), und eine Bestimmung (E9) der differentiellen Gruppenlaufzeit der optischen Verbindung gleich der Differenz zwischen dem Kehrwert der gegebenen Übertragungsrate und der zusätzlichen Verzögerung enthält, wobei das Verfahren auch die folgenden Schritte enthält:
eine Phasenmodulation (E1) des optischen Signals (λₙ) durch das digitale Signal (ST) am Eingang der Verbindung, und
eine Selektion (E3) des Polarisationszustands des resultierenden Signals (S_{EM}) gemäß einer der Winkelhalbierenden (B1, B2) der orthogonalen Achsen (AL_{EM}, AR_{EM}) in ein linear polarisiertes Signal (S_{PF}),
die Bestimmung (E4-E9) der differentiellen Gruppenlaufzeit abhängig von der Eigenschaft des polarisierten Signals.

2. Verfahren nach Anspruch 1, gemäß dem die Selektion eine Drehung des Polarisationszustands des resultierenden Signals (S_{EM}) enthält, um nur die Hälfte der Energie jedes der Polarisationszustände gemäß den orthogonalen Achsen des resultierenden Signals (S_{EM}) durch einen ortsfesten optischen Polarisator (PF) durchzulassen.

3. Verfahren nach Anspruch 1, gemäß dem die Selektion eine Drehung eines ausrichtbaren Polarisators enthält, um die Polarisationsachse des ausrichtbaren Polarisators im Wesentlichen mit der einen der Winkelhalbierenden (B1, B2) fluchtend auszurichten.

4. Verfahren nach Anspruch 1, gemäß dem die Bestimmung der differentiellen Gruppenlaufzeit enthält
eine Erfassung (E4) eines Augendiagramms (DO) auf zwei Ebenen des polarisierten Signals (S_{PF}) entsprechend den Polarisationszuständen und der in das modulierte optische Signal eingeführten zusätzlichen Verzögerung,
eine Maximierung (E5) einer Anzahl (Np) von in einer Sammelzone (ZC) des Augendiagramms vorhandenen Punkten durch Drehung mindestens des Polarisationszustands des aus der Verbindung austretenden modulierten optischen Signals (P_{CP2}),
eine Zuordnung (E5) der zusätzlichen Verzögerung zu der maximierten Anzahl von Punkten,
eine Inkrementierung (E8) der zusätzlichen Verzögerung und eine Iteration der vorhergehenden Schritte, so lange die Anzahl von Punkten (Np) nicht mindestens eine maximale Anzahl (Np_{M}) erreicht hat, und
wenn die maximale Anzahl erreicht ist (E6), eine Bestimmung (E9) der differentiellen Gruppenlaufzeit (T1) der optischen Verbindung gleich der Differenz zwischen dem Kehrwert der gegebenen Übertragungsrate und der der maximalen Anzahl zugeordneten zusätzlichen Verzögerung (T2_{M}).

5. Verfahren nach Anspruch 1, gemäß dem die Bestimmung der differentiellen Gruppenlaufzeit enthält
eine Erfassung (E4) eines Spektrums (SP_{PF}) des polarisierten Signals (S_{PF}) entsprechend den Polarisationszuständen und der in das modulierte optische Signal eingeführten zusätzlichen Verzögerung,
eine Maximierung (E5) der Amplitude von bei der Summe und bei der Differenz zwischen der Frequenz (Fₙ) des optischen Signals und einem ganzen Vielfachen der gegebenen Halb-Übertragungsrate (Fₙ ± kD/2) lokalisierten spektralen Absorptionslinien durch Drehung mindestens des Polarisationszustands des aus der Verbindung austretenden modulierten optischen Signals (P_{CP2}),
eine Zuordnung (E5) der zusätzlichen Verzögerung zu den maximierten spektralen Absorptionslinien,
eine Inkrementierung (E8) der zusätzlichen Verzögerung und eine Iteration der vorhergehenden Schritte, solange die spektralen Absorptionslinien keine maximalen Amplituden (RS_{M}(Fₙ ± kD/2)) erreicht haben, und
wenn die maximalen Amplituden erreicht sind (E6), eine Bestimmung (E9) der differentiellen Gruppenlaufzeit (T1) der optischen Verbindung gleich der Differenz zwischen dem Kehrwert der gegebenen Übertragungsrate (D) und der den maximalen Amplituden zugeordneten zusätzlichen Verzögerung (T2_{M}).

6. Verfahren nach Anspruch 1, das eine Drehung (E3) des Polarisationszustands des modulierten optischen Signals (λₙ) am Eingang (CP1) der optischen Verbindung enthält.

7. System zur Messung der differentiellen Gruppenlaufzeit (T1) einer Lichtleitfaser-Verbindung (LI), die ein von einem digitalen Signal (ST) moduliertes optisches Signal (λₙ) mit einer gegebenen Übertragungsrate befördert, das eine Einrichtung (CP2) zur Drehung des Polarisationszustands des aus der Verbindung austretenden modulierten optischen Signals (P_{CP2}), eine Einrichtung (LR) zur Einführung einer zusätzlichen Verzögerung (T2) in das modulierte optische Signal, eine Einrichtung (EM) zur Kombination des verzögerten modulierten optischen Signals (P_{CP2}(t-T2)) und des nicht verzögerten modulierten optischen Signals (P_{CP2}(t), die gemäß zwei orthogonalen Komponenten (AL_{EM}, AR_{EM}) polarisiert sind, in einem resultierenden optischen Signal (S_{EM}), und eine Einrichtung (OSC, AS, UM) zur Bestimmung der differentiellen Gruppenlaufzeit der optischen Verbindung gleich der Differenz zwischen dem Kehrwert der gegebenen Übertragungsrate und der zusätzlichen Verzögerung enthält, wobei das System auch enthält:
eine Einrichtung (TXₙ) am Eingang der Verbindung zur Phasenmodulation des optischen Signals (λₙ) durch das digitale Signal (ST), und
eine Einrichtung (CP3, PF) zur Selektion des Polarisationszustands des resultierenden Signals (S_{EM}) gemäß einer der Winkelhalbierenden (B1, B2) der orthogonalen Achsen (AL_{EM}, AR_{EM}) in ein linear polarisiertes Signal (S_{PF}),
wobei die Bestimmungseinrichtung (OSC, AS, UM) die differentielle Gruppenlaufzeit abhängig von einer Eigenschaft des polarisierten Signals bestimmen kann.

8. System nach Anspruch 7, bei dem die Selektionseinrichtung einen ortsfesten Polarisator (PF) und eine Einrichtung (CP3) enthält, um den Polarisationszustand des resultierenden Signals (S_{EM}) so zu drehen, dass nur im Wesentlichen die Hälfte der Energie jedes der orthogonalen Polarisationszustände des resultierenden Signals (S_{EM}) durch den ortsfesten Polarisator (PF) durchgelassen wird.

9. System nach Anspruch 7, bei dem die Selektionseinrichtung einen ausrichtbaren Polarisator enthält, der gedreht werden kann, um die Polarisationsachse des ausrichtbaren Polarisators mit der einen der Winkelhalbierenden (B1, B2) fluchtend auszurichten.

10. System nach Anspruch 7, bei dem die Bestimmungseinrichtung ein digitales Oszilloskop (OSC) enthält, um ein Augendiagramm (DO) des polarisierten Signals (S_{PF}) zu erfassen.

11. System nach Anspruch 7, bei dem die Bestimmungseinrichtung einen optischen Spektrumsanalysierer (AS) enthält, um ein optisches Spektrum (SP_{PF}) des polarisierten Signals (S_{PF}) zu erfassen.

12. System nach Anspruch 7, das eine Einrichtung (CP1) am Eingang der optischen Verbindung enthält, um den Polarisationszustand des modulierten optischen Signals (λₙ) zu drehen.

13. Digitales Oszilloskop (OSC) in einem System zur Messung der differentiellen Gruppenlaufzeit (T1) einer Lichtleitfaser-Verbindung (LI), die ein von einem digitalen Signal (ST) moduliertes optisches Signal (λₙ) mit einer gegebenen Übertragungsrate befördert, **dadurch gekennzeichnet, dass** es enthält:
eine Einrichtung, um ein Augendiagramm auf zwei Ebenen (DO) eines linear polarisierten Signals (S_{PF}) zu erfassen, das durch eine Selektion des Polarisationszustands eines Signals (S_{EM}) erzeugt wird, das aus einer Kombination des um eine zusätzliche Verzögerung (T2) verzögerten phasenmodulierten optischen Signals (P_{CP2}(t-T2)) und des nicht verzögerten phasenmodulierten optischen Signals (P_{CP2}(t)), die gemäß zwei eigenen orthogonalen Polarisationsachsen (AL_{EM}, AR_{EM}) polarisiert sind, am Ausgang der Verbindung resultiert, wobei das resultierende Signal im Wesentlichen gemäß einer der Winkelhalbierenden (B1, B2) der orthogonalen Achsen (AL_{EM}, AR_{EM}) polarisiert ist,
eine Einrichtung zur Bestimmung einer maximalen Anzahl (Np) von Punkten, die in einer Sammelzone (ZC) des Augendiagramms während mindestens einer Drehung des Polarisationszustands des aus der Verbindung austretenden modulierten optischen Signals (P_{CP2}) vorhanden sind, und
eine Einrichtung zur Zuordnung der zusätzlichen Verzögerung zur bestimmten maximalen Anzahl von Punkten.

14. Optischer Spektrumsanalysierer (AS) in einem System zur Messung der differentiellen Gruppenlaufzeit (T1) einer Lichtleitfaser-Verbindung (LI), die ein von einem digitalen Signal (ST) moduliertes optisches Signal (λₙ) mit einer gegebenen Übertragungsrate befördert, **dadurch gekennzeichnet, dass** er enthält:
eine Einrichtung zur Erfassung eines optischen Spektrums (SP_{PF}) eines linear polarisierten Signals (S_{PF}), das durch eine Polarisationszustandsselektion eines Signals (S_{EM}) erzeugt wird, das aus einer Kombination des um eine zusätzliche Verzögerung (T2) verzögerten phasenmodulierten optischen Signals (P_{CP2}(t-T2) und des nicht verzögerten phasenmodulierten optischen Signals (P_{CP2}(t)), die gemäß zwei eigenen orthogonalen Polarisationsachsen (AL_{EM}, AR_{EM}) polarisiert sind, am Ausgang der Verbindung resultiert, wobei das resultierende Signal im Wesentlichen gemäß einer der Winkelhalbierenden (B1, B2) der orthogonalen Achsen (AL_{EM}, AR_{EM}) polarisiert ist,
eine Einrichtung zur Bestimmung der bei der Summe und bei der Differenz zwischen der Frequenz des optischen Signals (Fₙ) und einem ganzen Vielfachen der Halb-Übertragungsrate (Fₙ ± kD/2) lokalisierten maximalen spektralen Absorptionslinien während mindestens einer Drehung des Polarisationszustands des aus der Verbindung austretenden modulierten optischen Signals (P_{CP2}), und
eine Einrichtung, um die zusätzliche Verzögerung den maximalen spektralen Absorptionslinien zuzuordnen.

15. Computerprogramm, das Anweisungen zur Durchführung des Programms nach Anspruch 1 enthält, wenn das Programm von einem Prozessor durchgeführt wird.

16. Computerlesbarer Aufzeichnungsträger, auf dem ein Computerprogramm aufgezeichnet ist, das Anweisungen zur Ausführung der Schritte des Verfahrens nach Anspruch 1 enthält.
